# EUROPEAN PATENT APPLICATION

(11) **EP 0 860 353 A1**
(43) Date of publication of application: **26.08.1998**
(21) Application number: 97103039.0
(22) Date of filing: 25.02.1997
(51) Int. Cl.: B62J 6/00, B62H 5/20, B62H 5/14

(54) **Identification device for two-wheeled vehicle**

(71) Applicant: Sakae Co., Ltd., Tokyo (JP)
(72) Inventor: Nakamura, Fujio, 2-3-35 Oyada Adachi-ku, Takyo (JP)
(74) Representative: Kirschner, Klaus Dieter, Dipl.-Phys.

(57) **Abstract**

A two-wheeled vehicle 10 for easy handling in a place where two-wheeled vehicles are parked in congestion, including a transmitter 11 for sending an identification signal, indicator means 26 (26A, 26B) or a lock 18 mounted on the two-wheeled vehicle 10, a receiving circuit 24 for receiving the identification signal from the transmitter 11, and a control circuit for actuating lock-opening means 27 or indicator means 26 incorporated in the lock 18 when the receiving circuit 24 receives the predetermined identification signal.

## Description

### BACKGROUND OF THE INVENTION

The present invention relates to a two-wheeled vehicle, such as a bicycle, a motorized bicycle, or a motorcycle, and more particularly to a two-wheeled vehicle superior in ease of handling in an outdoor parking lot for two-wheeled vehicles.

Bicycles are the most common means of transportation from one's home to the nearest railroad station. For this reason, bicycle parking lots are provided near a majority of railroad stations. Even if one can secure a relatively wide space enough to park his bicycle in such a parking lot, since the parking lot is crowded with many bicycles in due course, it is difficult for him to find out his bicycle from a great number of bicycles. Particularly, in an outdoor parking lot without lighting, it is extremely difficult to find out one's own bicycle in the dusk.

Even when there was a relatively wide space when one parked and locked his bicycle, if many bicycles are parked afterward clustered around his bicycle, it is necessary to insert the key through a tangle of bicycles into the lock of his bicycle. This opening the lock is not an easy job.

As described above, with two-wheeled vehicles such as a conventional bicycle, it is not easy to handle in a crowded parking lot or the like.

### SUMMARY OF THE INVENTION

The object of the present invention is to provide a two-wheeled vehicle which is easy to handle in an area, such as a two-wheeled vehicle parking lot, where two-wheeled vehicles, including conventional bicycles are parked crowded together.

To solve the above problem, the present invention adopts the following arrangement. A two-wheeled vehicle set forth in Claim 1 includes a transmitter for transmitting an identification signal; indicator means mounted on the two-wheeled vehicle; a lock mounted on the two-wheeled vehicle; lock-opening means incorporated in the lock; a receiving circuit mounted on the two-wheeled vehicle, for receiving an identification signal from the transmitter; and a control circuit mounted on the two-wheeled vehicle, for actuating the indicator means and the lock-opening means when the receiving circuit receives a predetermined identification signal. A two-wheeled vehicle set forth in Claim 2 includes a transmitter for transmitting an identification signal; indicator means mounted on the two-wheeled vehicle; a lock mounted on the two-wheeled vehicle; lock-opening means incorporated in the lock; a receiving circuit mounted on the two-wheeled vehicle, for receiving the identification signal from the transmitter; and a control circuit mounted on the two-wheeled vehicle, for actuating the indicator means and the lock-opening means when the receiving circuit receives a predetermined identification signal.

The transmitter is carried by the user of a two-wheeled vehicle and transmits a predetermined identification signal by the user operating the transmitter.

The types of transmitters that can be used for this purpose include a radio wave transmitter for transmitting an analog or digital signal, a sound wave transmitter for transmitting sound waves, or a light transmitter for transmitting an infrared signal. In addition, other types of transmitters which transmit signals including an identification signal peculiar to each two-wheeled vehicle can be used.

The transmitter is desired to be an IC-built-in pendant, such as hanging on the neck of the user to avoid forgetting to carry the transmitter.

The receiving circuit, the lock or the indicator means, and the control circuit for actuating at least either one of the lock-opening means and the indicator means incorporated in the lock are mounted as attachments to a two-wheeled vehicle.

When the receiving circuit receives a predetermined identification signal, the control circuit actuates the lock-opening means or the indicator means. The control circuit is preferably formed of an IC circuit, and may be arranged in an appropriate manner by selecting in the interior of the bicycle lock, the saddle or the seat pillar, which is not exposed to wind and rain.

The lock-opening means, when it operates, places the lock in the opened condition. Therefore, the user can have the lock opened automatically by manipulating the transmitter without inserting the key into the lock of the two-wheeled vehicle.

As the lock-opening means, a solenoid coil, an electric servo motor, an air motor, or the like may be used to release the lock mechanism.

The indicator means indicates the two-wheeled vehicle's whereabouts by a sound or light.

For the sounding device to indicate the location by a sound, an electric buzzer, an electronic sound generator or the like may be used.

For the light-emitting device to indicate the location by light, a device such as a light-emitting diode may be used. Mounting such a light-emitting device in the reflector of the two-wheeled vehicle is advantageous in that effective use can be made of the reflection of light generated by the light-emitting device.

The indicator means, when it operates, indicates the location of the user's two-wheeled vehicle on which the indicator means is mounted. Therefore, even in such a place as a parking lot where great many two-wheeled vehicles are crowded together, the user can easily find out his two-wheeled vehicle by manipulating the transmitter.

The light-emitting device is useful at night, while the sounding device is useful in supplementing the indication capability of the light-emitting device during the daytime.

The identification signal may be composed of binary digits. As the identification signal, a combination of numeric values, for example, may be used which corresponds to a frame number attached to the bicycle frame, whereby management for theft prevention or the like can be rationalized, and by using combinations of greater numeric values, security against theft can be promoted.

### BRIEF DESCRIPTION OF THE DRAWINGS

Fig. 1 is a side view schematically showing a bicycle according to the present invention;
Fig. 2 is a schematic block diagram of the transmitter and the receiving apparatus according to the present invention; and
Fig. 3 is a front view of a lock according to the present invention, with a portion broken away for clarity.

### DESCRIPTION OF PREFERRED EMBODIMENTS

The present invention will be described in detail referring to an embodiment shown in the accompanying drawings.

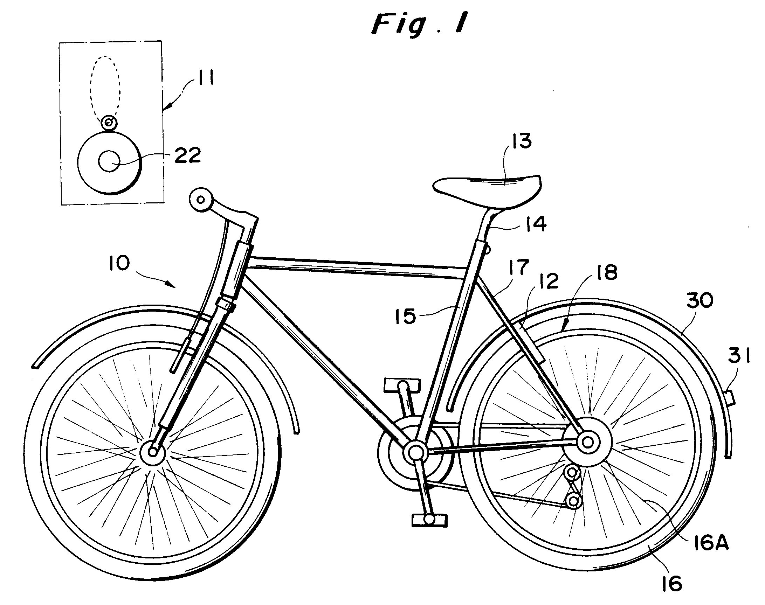

Fig. 1 is a side view schematically showing an embodiment of a bicycle according to the present invention.

A bicycle according to the present invention comprises a transmitter 11 of a pendant type, for example, which is carried by the user of the bicycle 10, and a receiving apparatus 12 which operates on receiving an identification signal from the transmitter 11.

In the example illustrated, the receiving apparatus 12 is mounted in conjunction with a lock 18 on a seat stay 17 located in a position closer to a rear wheel 16 than a seat tube 15.

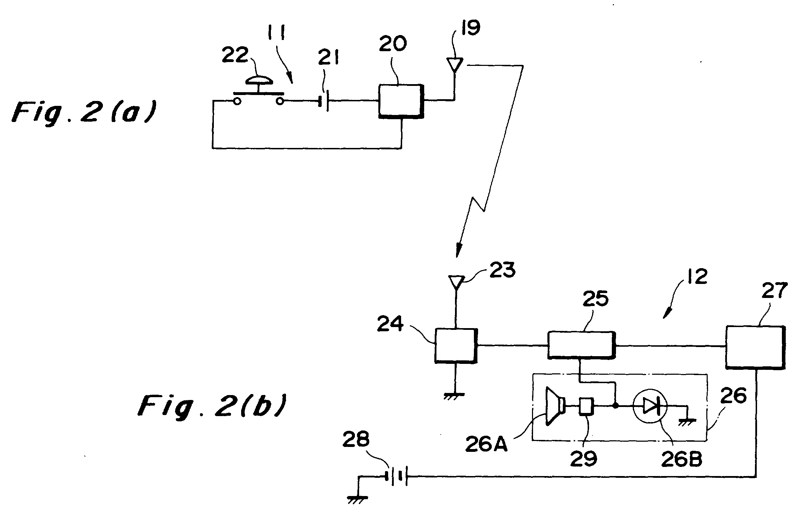

Fig. 2 is a schematic block diagram including the transmitter 11 and the receiving apparatus 12.

As shown in Fig. 2(A), the transmitter 11 includes a transmitting circuit 20 with a transmitting antenna 19, a power source 21 preferably formed by a thin battery, such as a button-type battery, and a push-button switch 22 to control the operation of the transmitting circuit 20. The transmitting circuit 20 generates an identification signal in the form of a digital code signal, for example, when the push-button switch 22 is manipulated. The identification signal is transmitted from the transmitting antenna 19 when the use of the bicycle 10 manipulates the push-button switch 22.

As the identification signal sent from the transmitter 11, an analog signal may be used, but a digital code signal is preferably adopted to enable the user of a large number of identification signals without duplication, always prevent radio interference among numerous bicycles, and enhance the security against theft, or the like. Any appropriate distance can be selected as the signal reachable distance from the transmitter 11 can be selected appropriately, such as a range of 5 to 10 meters, for example.

By arranging for identification signals to correspond to the frame numbers attached to the bicycle frames, the management of bicycles 10 can be rationalized. Moreover, if identification signals are formed of a combination of manifold numeric values, the security against theft or the like can be further improved.

As shown in Fig. 2(B), the receiving apparatus 12 for receiving an identification signal from the transmitter 11 includes a receiving circuit 24 for receiving an identification signal via the transmitting antenna 23, a control circuit 25 for deciding whether or not the receiving circuit 24 is receiving a predetermined identification signal, indicator means 26 whose operation is controlled by the control circuit 25, lock-opening means 27 used for the lock 18 and controlled by the control circuit 25, and a power source 28.

The control circuit 25 is formed by an IC circuit, for example, and puts both the indicator means 26 and the lock-opening means 27 in operating condition when the receiving circuit 24 receives a predetermined identification signal.

The indicator means 26, which is controlled by the control circuit 25, may be composed of a sounding device 26A, such as a speaker connected to the control circuit 25 through an amplifier 29, for example, and a light-emitting device 26B, such as a light-emitting diode.

The sounding device 26A, when it operates, emits a desired electronic sound. As this sounding device 26A, instead of the speaker, a buzzer or any other type of sounding device may be adopted if it is necessary.

For the light-emitting device 26B, a miniature bulb may be used, but a light-emitting diode is preferably used to reduce power consumption of the power source 28. If a light-emitting diode is used as the light-emitting device 26B, the light-emitting diode is preferably incorporated in a reflector 31 mounted on the rear side or the like of a rear-wheel mud guard 30 as shown in Fig. 1, for example.

The reflector 31 reflects the light of the light-emitting device 26B composed of a light-emitting diode included inside the reflector 31. By the reflection by the reflector 31, light emission by the light-emitting device 26B in the reflector 31 is made easily recognizable from outside.

Therefore, by incorporating the light-emitting device 26B in the reflector 31, the visibility of the operation of the light-emitting device 26B can be improved even by small power consumption. To enhance the visibility, instead of continuously lighting, the light-emitting device 26B is desirably made to flicker.

As the place of installation of the light-emitting device 26B, besides the reflector 31, the lock 18, for example, may be selected.

For the indicator means 26, it is also possible to adopt either the sounding device 26A or the light-emitting device 26B. Luminous indication by the light-emitting device 26B is superior in visibility particularly at night. To supplement the indication capability during the daytime of the light-emitting device 26B, it is preferable to incorporate a sounding device 26A to a bicycle 10 in addition to the light-emitting device 26B.

For the power source 28, a small-size dry cell may be used, or a small rechargeable battery may be used with a hub dynamo or a solar cell.

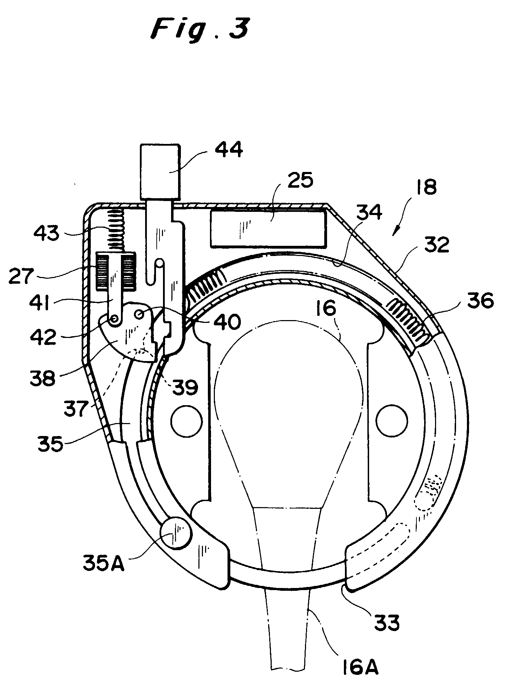

Fig. 3 is a front view of the lock 18, in which the control circuit 25, the lock-opening means 27, etc. are included, with a portion broken away for clarity.

In the illustrated example, the lock 18 is a well-known bolt-type annular bicycle lock. The lock 18 has a generally annular housing 32 fixed to the seat stay 17 in such a manner as to surround the rear wheel 16 as seen at a cross section of the rear wheel 16. The housing 32 has a cutoff portion 33 which enables spokes 16A to pass through when the rear wheel 16 rotates. The housing 32 has an annular guide groove 34 formed therein. In the annular guide groove 34, there is slidably contained a circular-arc bolt member 35 which can extend to a lock-fastened position to close the cutoff portion 33 between the spokes 16A.

The bolt member 35 is held at the lock-opened position to thereby open the cutoff portion 33 by the spring force of an extension coil spring 36 arranged in the guide groove 34. By moving a knob 35A attached to the bolt member 35, the bolt member 35 can be extended to the lock-fastened position to close the cutoff portion 33.

The bolt member 35, when located at the lock-fastened position, accepts a lock portion 39 of the lock member 38 into the lock notch 37 formed in the bolt member 35. The lock member 38 can pivot on the axis 40 between the locked position where the lock member 39 engages into the lock notch and the unlocked position where the engagement is released. An operating rod 41 formed of a metallic material, such as iron, and serving to enable the lock member to pivot is connected to the lock member 38 through the axis 42.

The operating rod 41 is acted on by the spring force of a compression coil spring 43, thus applying a biasing force to the lock member 38 to move toward the locked position. An electromagnetic solenoid coil for pulling the lock member 38 to the unlocked position by overcoming this spring force is arranged as the lock-opening means 27 wound around the operating rod 41.

When the lock-opening means 27 formed of the electromagnetic solenoid coil is not supplied with power from the control circuit 25, the lock member 38 is receiving the biasing force from the compression coil spring 43 to move to the locked position where the lock portion 39 engages with the lock notch 37. Under this condition, when the bolt member 35 is pushed to the locked position by moving the knob 35A, the bolt member 35 is held at the lock-fastening position by the lock member 38, so that the lock 18 is placed in the fastened condition.

Under the condition that the lock 18 is fastened, when power is supplied from the control circuit 25 to the electromagnetic solenoid coil as the lock-opening means 27, the lock-opening means 27 pulls the operating rod 41 up by overcoming the spring force of the compression coil spring 43. As the operating rod moves upward and the bolt member 35 turns around the axis 40 toward the lock-opened position where the lock portion 39 disengages from the lock notch 37, the bolt member 35 is held by the extension spring force of the coil spring 36 in the lock-lock-opened position where the cutoff portion 33 is open, and thus the lock 18 is opened automatically.

In the example shown in Fig. 3, a key 44 for emergency is shown which is used to open the lock 18 regardless of the unactuated condition of the lock-opening means 27. By inserting the key 44 into a key hole 45 in the housing 32 and turning the key 44 clockwise as shown in the drawing around the axis 46, the lock member 38 can be turned by the end portion of the key 44 to move to the lock-opened position. The key 44 for emergency may be dispensed with.

Further in the example in Fig. 3, the control circuit 25 is arranged in the housing 32. In addition to this control circuit 25, the receiving circuit 24 and so on may be arranged in the housing 32. The components such as those circuits 24 and 25 may be arranged in a position not exposed to wind and rain, such as in the saddle 13 or the seat pillar 14 shown in Fig. 1.

For the lock, locks of various structures other than that shown in Fig. 3 may be used, and for the lock-opening means, various kinds of driving mechanisms, such as an electric servo motor or an air motor may be used.

In the bicycle 10 according to the present invention, by manipulating the push-button switch 22 of the transmitter 11 carried by the user of the bicycle 10, the identification signal can be sent to the receiving circuit 24 of the receiving apparatus 14 mounted on the bicycle 10.

When the receiving circuit 24 receives a predetermined identification signal, the control circuit 25 actuates the sounding device 26A or the light-emitting device 26B. The bicycle's whereabouts is notified to the owner by a sound of the sounding device 26A or by light of the light-emitting device 26B.

The control circuit 25 actuates the lock-opening means 27 to automatically switch the lock 18 from the fastened to the opened condition.

Therefore, the user can easily find out his bicycle 10 from among a large number of bicycles parked together whether in the darkness or in the daytime. Since the lock is opened automatically, it is not necessary to bend down between bicycles twisted together to insert the key into the lock in a cramped posture, but it is very easy to take the bicycle 10 out.

Description has been made of a case in which the operation of both the lock-opening means and the indicator means incorporated in the lock is controlled by the control circuit, but it is possible to suspend the use of either one of the lock-opening means and the indicator means, and control only the other one of the lock-opening means and the indicator means by the control circuit. In addition, remote-control lock-fastening means may be incorporated in the lock when necessary.

In the exemplary embodiment, description has been made of a case where the present invention is applied to a bicycle, but the present invention is not limited to this form of embodiment, and can be applied to tricycles, motorized bicycles, and motorcycles.

With a two-wheeled vehicle according to the present invention, by actuating the indicator means by the user operating transmitter, one's own bicycle can be found out relatively easily in such a place as a parking lot where a great number of two-wheeled vehicles are parked in congestion.

By actuating the lock-opening means of the lock by the user operating the transmitter, it is fairly easy to open the lock automatically and take out one's own two-wheeled vehicle without inserting the key into the key hole of the lock or without crouching for this lock opening work even if there are many two-wheeled vehicles intertwined together.

Hence, according to the present invention, handling of a two-wheeled vehicle can be made easy in such places as a bicycle parking lot where great many two-wheeled vehicles are parked clustered close together.

## Claims

1. A two-wheeled vehicle comprising:
a transmitter for transmitting an identification signal;
indicator means mounted on said two-wheeled vehicle;
a receiving circuit mounted on said two-wheeled vehicle, for receiving said identification signal from said transmitter; and
a control circuit mounted on said two-wheeled vehicle, for actuating said indicator means when said receiving circuit receives a predetermined identification signal.

2. A two-wheeled vehicle comprising:
a transmitter for transmitting an identification signal;
indicator means mounted on said two-wheeled vehicle;
a lock mounted on said two-wheeled vehicle;
lock-opening means incorporated in said lock;
a receiving circuit mounted on said two-wheeled vehicle, for receiving said identification signal from said transmitter; and
a control circuit mounted on said two-wheeled vehicle, for actuating said indicator means and said lock-opening means when said receiving circuit receives a predetermined identification signal.

3. A two-wheeled vehicle according to Claim 1 or 2, wherein said indicator means is a light-emitting device.

4. A two-wheeled vehicle according to Claim 3, further comprising: a reflector, wherein said light-emitting device is a light-emitting diode incorporated in said reflector.

5. A two-wheeled vehicle according to Claim 1 or 2, wherein said identification signal corresponds to a frame number attached to said two-wheeled vehicle.
